# EUROPÄISCHE PATENTSCHRIFT

(11) **EP 1 678 084 B1**
(45) Veröffentlichungstag und Bekanntmachung des Hinweises auf die Patenterteilung: **20.04.2011**
(21) Anmeldenummer: 04817376.9
(22) Anmeldetag: 27.10.2004
(51) Int. Cl.: C02F 1/12, C02F 1/14

(54) **MEERWASSERENTSALZUNGSVERFAHREN UND -VORRICHTUNG**
SEAWATER DESALINATION METHOD AND DEVICE
PROCEDE ET DISPOSITIF DE DESSALEMENT D'EAU DE MER

(30) Priorität: 28.10.2003 DE 10351198
(43) Veröffentlichungstag der Anmeldung: 12.07.2006
(73) Patentinhaber: Goldschmidt, Rolf, 07381 Langenorla (DE)
(72) Erfinder: Goldschmidt, Rolf, 07381 Langenorla (DE)
(86) Internationale Anmeldenummer: PCT/DE2004/002419
(87) Internationale Veröffentlichungsnummer: WO 2005/042411

(56) Entgegenhaltungen:
- DE-A1- 2 503 249
- DE-A1- 2 829 903
- DE-A1- 19 621 042
- DE-A1- 19 714 512
- RU-C1- 2 169 237
- PATENT ABSTRACTS OF JAPAN Bd. 1996, Nr. 09, 30. September 1996 (1996-09-30) & JP 08 134963 A (TAISEI CORP), 28. Mai 1996 (1996-05-28)

## Beschreibung

Die Erfindung betrifft ein Meerwasserentsalzungsverfahren und eine Meerwasserentsalzungsvorrichtung.

Seit geraumer Zeit sind zahlreichen Verfahren und Vorrichtungen zur Entsalzung von Meer- oder Brackwasser bekannt, die auf der Umkehrosmose, der Verwendung ionenselektiver Membranen bzw. auf dem Verdampfen und Kondensieren von Wasser beruhen.

Die mehrfache Destillation von Meerwasser zur Gewinnung von reinem Süßwasser vermittels Sonnenenegie-Kollektoren und Plattenwärmetauscher-Einheiten ist bspw. aus EP 0 593 687 B1 bekannt.

Die Schrift DE 101 52 702 A1 offenbart bspw. ein Verfahren, das ausschließlich mit erneuerbaren Energien betrieben wird. Durch direkte Nutzung solarer Energie werden Umwandlungsverluste vermieden, so dass die Anlage besonders kostengünstig betrieben werden kann.
Bei diesem Verfahren wird in der Brennlinie von Parabolrinnenspiegeln Luft in wärmeisolierten Rohrleitungen bekannter Bauart erhitzt und von unten in einen Reaktor eingeblasen. Von oben wird in den Reaktor Salz- oder Brackwasser eingesprüht. Die Anlage lässt sich so steuern, dass wahlweise der gesamte Wassergehalt verdampft wird oder nur ein Anteil davon. Ferner ist die Anlage auch zur Salzgewinnung geeignet. Der erzeugte Dampf wird im Gegenstrom in einem Kühlgefäß kondensiert, wobei er gleichzeitig zur Vorerwärmung des zugeführten Salzwassers dient. Elektrische Energie wird nur zum Betrieb je einer Pumpe zur Luft- und Wasserzufuhr benötigt. Der erforderliche Strom lässt sich ebenfalls aus erneuerbarer Energie gewinnen, zum Beispiel aus einer Windkraftanlage. Zur Steigerung des Energiegehaltes der erhitzten Luft lässt sich die gesamte Anlage auch unter erhöhtem Druck betreiben. Alternativ zu Parabolrinnenspiegeln ist eine Erhitzung der Luft auch in Solartürmen mit Volumenreceivern möglich oder in Verbindung mit anderen Konzentratoren der Sonnenenergie.

Die Schrift DE 101 24 082 A1 offenbart ein Verfahren zur Wasserentsalzung, mit den Schritten: Bereitstellen von salzhaltigem Wasser mit einer Temperatur T1; Dispergieren des salzhaltigen Wassers in ein gasförmiges Medium mit einer Temperatur T2, so dass das Wasser zumindest teilweise verdunstet und das gasförmige Medium mit Wasser beladen und aufgewärmt wird; Transport des mit Wasser beladenen gasförmigen Mediums zu einer Einrichtung zum Kühlen des gasförmigen Mediums und Kondensieren zumindest eines Teils des Wassers aus dem sich abkühlenden, mit Wasser beladenen gasförmigen Medium. Bei diesem Verfahren wird das salzhaltige Wasser in Abwärtsrichtung in das gasförmige Medium hineindispergiert, dieses dabei beschleunigt, und -das beschleunigte gasförmige Medium umgelenkt und so in ein sich in Aufwärtsrichtung erstreckendes Rohr eingeleitet wird, dass es darin aufwärts und in Richtung auf die Einleitung zum Kühlen des gasförmigen Mediums strömt.

Die Schrift DE 44 44 932 C2 offenbart eine Vorrichtung zur Wasserentsalzung mit einem einen Innenraum umgrenzenden und gegenüber der Atmosphäre luftdicht abschließbaren Behälter, wobei der Behälter eine oberseitige, lichtdurchlässige Abdeckung aufweist und in seinem Innenraum ein Wasserbecken sowie zumindest eine Auffangrinne für das verdunstete und an den Behälterinnenflächen kondensierte Wasser angeordnet sind, bei dem das Wasserbecken als ein von dem zu entsalzenden Wasser durchströmbarer Wasserkanal ausgebildet ist. Außerdem ist der Innenraum des Behälters in einen Hauptraum und zumindest einen neben dem Hauptraumangeordneten Nebenraum unterteilt, die über eine Öffnung miteinander in Verbindung stehen. Der Wasserkanal ist im Hauptraum und die Auffgangrinne ist im Nebenraum angeordnet, wobei die Abdeckung an der Oberseite des Hauptraumes angebracht ist und den Wasserkanal überdeckt.

Die Schrift DE 199 48 512 C2 offenbart eine Meerwasser-Entsalzungsanlage, die neben der Gewinnung von Süßwasser auch die Erzeugung von Meersalz und elektrischer Energie ermöglicht. Diese Meerwasser-Entsalzungsanlage besteht aus einem über einen Meerwasserzulauf gespeisten, beheizten Meerwasserbecken, einem über dem Meerwasserbecken vorhandenen Dampfraum, dessen oberer Abschluss ein gekühlter Kondensierungsraum mit einer Kondenswasserabführung bildet, sowie einem oberhalb des Kondensierungsraumes angeordneten, solarenergiegespeisten Heizraum, wobei die Kondenswasserabführung in wenigstens ein Laufrad mündet und dieses antreibt, dessen Abtriebswelle eine Kopplung mit einem Generator zur Erzeugung elektrischer Energie aufweist. Das Verfahren zur Gewinnung von Meersalz aus einer Meerwasser- Entsalzungsanlage ist dadurch gekennzeichnet, dass die gesättigte Lösung am Ende des Verdunstungsvorganges aus dem Meerwasserbecken abgezogen und unter Nutzung der zurückgeführten Restwärmeenergie eines in der Meerwasser-Entsalzungsanlage vorhandenen Heizrohrkreislaufes nachfolgend vollständig eingetrocknet wird, so dass das Meersalz übrig bleibt.

DE 196 34 028 A1 offenbart eine Vorrichtung zur Entsalzung von Wasser in einem tragbaren Behälter.

Die Schrift DE 196 21 042 A1 offenbart eine Anlage zur Entsalzung von See- und Meerwasser bestehend aus einem Verdampfungsraum, der aus einem, mit einer für Sonnenlicht durchlässigen Scheibe abgedecken Schwimmkörper gebildet ist, einer Einrichtung zur Ableitung wassergesättigter Luft mit darüber befindlichem Ventilator, einem mit Meerwasser gekühltem Kondensator mit Sammelvorrichtung und mit in den Verdampferraum rückführenden Leitungen und einem Behälter für entsalztes Wasser, wobei der Boden des Schwimmkörpers als Wärmetauschereinheit zwischen zuführenden und rückführenden Leistungen dient.
Durch die Sonnenstrahlung / Erwärmung durch die Sonnenenergie wird bei der Vorrichtung gemäß D1 ein Verdampfen des salzhaltigen Wassers bewirkt.

Der Nachteil dieser Verfahren bzw. Verrichtungen ist, dass sie zum Teil konstruktiv sehr aufwendig sind oder die örtlichen, natürlichen Begebenheiten der Standorte, wie Sonneneinstrahlung, Luft- und Wassertemperatur, Windströmungen und Meeresbrandung nicht bzw. nur zum Teil nutzbar machen.

Der Erfindung liegt deshalb die Aufgabe zu Grunde, ein Meerwasserentsalzungsverfahren und eine Meerwasserentsalzungsvorrichtung bereitzustellen, die unter Nutzung regenierbarer Energien und der örtlichen Begebenheiten der Standorte in Meeresnähe autark auch an Plätzen der Erde unter Nutzung natürlicher Energiequellen Energie-, Aufwand- und somit Kosten-gering betrieben werden können, an denen keine Infrastruktur in Form von Stromversorgungsnetzen o.ä. vorhanden ist.

Die Aufgabe wird erfindungsgemäß durch eine Vorrichtung gemäß Anspruch 1 und ein Verfahren gemäß Anspruch 10 gelöst. Vorteilhafte Ausgestaltungen sind den nachgeordneten Ansprüchen entnehmbar.

Die erfindungsgemäße Vorrichtung besteht aus einem gegenüber der Atmosphäre luftdicht abgeschlossenen Reaktor (1), der zumindest größtenteils lichtdurchlässig ist und an seiner Oberseite (11) über einen Auslass (111) für feuchte Luft, der mit einem Rückschlagventil (112) und einen Abscheider für Wassertropfen (113) versehen sein kann, verfügt sowie an seiner Unterseite (12) ein Wasserbecken (121) mit mindestens einer Rührvorrichtung (122) und/oder Luftzuführung (123), einen Einlass (124) für Frischmeereswasser, der mit einem Rückschlagventil (125) versehen sein kann, und einen Auslass (126) für hochkonzentriertes Salzwasser, der ein regelbares Ventil (127) besitzt. Dieser Reaktor (1) steht über den Auslass (111) mit einem, die feuchte Luft abführenden Fallrohr (2) in Verbindung, das zu einem Kondensierungsraum (3) im Tiefenwasser des Meeres führt. Der Kondensationsraum (3) kann im Tiefenwasser gelegen sein und mit einem Steigrohr (4) in Verbindung stehen, das über die Meeresoberfläche führt und über das das Süßwasser abzaugbar durch Pumpen (6) ist.
Alternativ dazu kann das Fallrohr (2) in einen Kondensationsraum (3) münden, der von dem Tiefenwasser bis zur Meeresoberfläche reicht, das Fallrohr (2) umschließt und somit einen Steigraum (5) bildet, über den das Süßwasser durch Pumpen (6) abzaugbar ist.
Die Rührvorrichtung (122), die Luftzuführung (123) und die Pumpen (6) sind durch Strom aus erneuerbarer Energie, wie bspw. Sonnenenergie, Windkraft, Kraft der Wellenbewegung betreibbar. Durch das sequentielle oder ständige Abpumpen des gebildeten Süßwassers zum Verbraucher sowie die Rückschlagventile (112) und (125) wird eine gerichete Bewegung von Feuchtigkeit bzw. Flüssigkeit generiert.

Das erfindungsgemäße Verfahren umfasst die folgenden drei Schritte:
1. Sättigung der Luft mit Feuchtigkeit durch Vergischten im Reaktor (1)
2. Absaugen der mit Feuchtigkeit gesättigten Luft aus dem Reaktor (1) über das Fallrohr (2) nach dem Vergischten
3. Kondensation der mit Feuchtigkeit gesättigten Luft im Kondensationsraum (3) und Absaugen des Süßwassers.

Beim ersten Verfahrensschritt wird frisches Meerwasser über das Rückschlagventil (125) und den Einlass (124) in das Wasserbecken (121) geleidet und dort mittels der Rührvorrichtung (122) und/oder der Luftzuführungen (123) nahezu vollständig vergischtet. Durch zusätzliches Erwärmen des Meerwasser und der Gischt, bspw. durch Eintrag von Sonnenenergie durch die lichtdurchlässige Oberseite (11) des Reaktors (1), kann die Effizienz des Gischtens noch erhöht werden.

Die durch das Vergischten mit Feuchtigkeit gesättigte Luft wird im zweiten Verfahrensschritt über den Auslass (111) und das Rückschlagventil (112) abgesaugt. Dabei besteht die Möglichkeit, das diese Luft über und einen Abscheider für Wassertropfen (113), bspw. ein tuch- oder vliesartiges Gewebe bzw. durch eine Zentrifuge geführt wird, um salzhaltige Flüssigkeitstropfen abzuscheiden.
Weiterhin besteht die Möglichkeit der Kompression der feinste Tröpfchen enthaltenden Luft zur Überführung in den gasförmigen Zustand.
Das Absaugen der durch das Vergischten mit salzarmer Feuchtigkeit gesättigte Luft kann während oder nach dem Vergischten stattfinden.

Im dritten Verfahrensschritt erfolgt die Kondensation der mit salzarmer Feuchtigkeit gesättigten Luft im Kondensationsraum (3) und das anschließende Absaugen des Süßwassers, so dass ein gerichteter Strom von Feuchtigkeit oder Flüssigkeit entsteht.
Dabei wird die mit salzarmer Feuchtigkeit gesättigte Luft entweder über das Fallrohr (2) in den Kondensationsraum (3), der sich im kalten Tiefenwasser befindet und demzufolge Süßwasser kondensiert, geleidet und von dort das Süßwasser über das Steigrohr (4) obgepumpt oder Alternativ dazu, wird die mit salzarmer Feuchtigkeit gesättigte Luft über das Fallrohr (2) in den Kondensationsraum (3) geführt (Doppelrohr), der von dem kalten Tiefenwasser bis zur warmen Meeresoberfläche reicht und das Fallrohr (2) umschließt (s.g. Doppelrohr), wobei dadurch der Steigraum (5) gebildet ist, in dem sich das kondensierte Süßwasser ansammelt, das durch Pumpen (6) aus dem Steigraum (5) absaugbar ist. Das Wasserbecken (121) des Reaktors ist über den Einlass (124) mit Rückschlagventil (125) kontinuierlich mit Meerwasser befüllbar, das durch den Sog des Abführens des Süßwassers / der mit salzarmer Feuchtigkeit gesättigte Luft transportiert wird.
Da im Wasserbecken (121) ständig vergischtet wird, ist es in periodischen Abständen notwendig, das hoch konzentrierte Salzwasser vermittels des regelbares Ventil (127) und des Auslasses (126) durch über den Einlass (124) mit Rückschlagventil (125) nachströmendes Meerwasser aus dem Wasserbecken (121) auszuwaschen.

Mit der erfindungsgemäßen Vorrichtung und dem erfindungsgemäßen Verfahren ist es möglich, bei 20°C und einer relativen Befeuchtung der Luft durch Vergischten von 80% eine Menge von 4,43 g Wasser aus lm³ befeuchter Luft zu gewinnen, indem diese 20°C warme Luft im Tiefenwasser des Meeres auf 10°C abgekühlt wird.

Aufgrund der Tatsache, dass das erfindungsgemäße Verfahren nur zur Erzeugung von Süßwasser/Trinkwasser und unter Nutzung regenierbarer Energien sowie der örtlichen Begebenheiten der Standorte in Meeresnähe durchgeführt wird, ist ein autarker sowie Aufwand- und Kosten-geringer Betrieb gewährleistet.

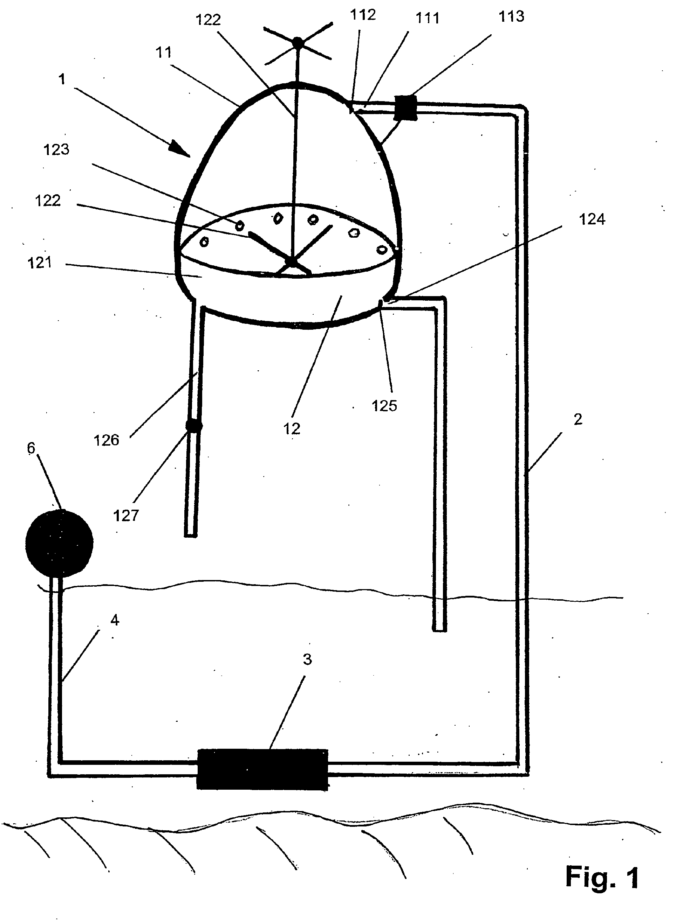

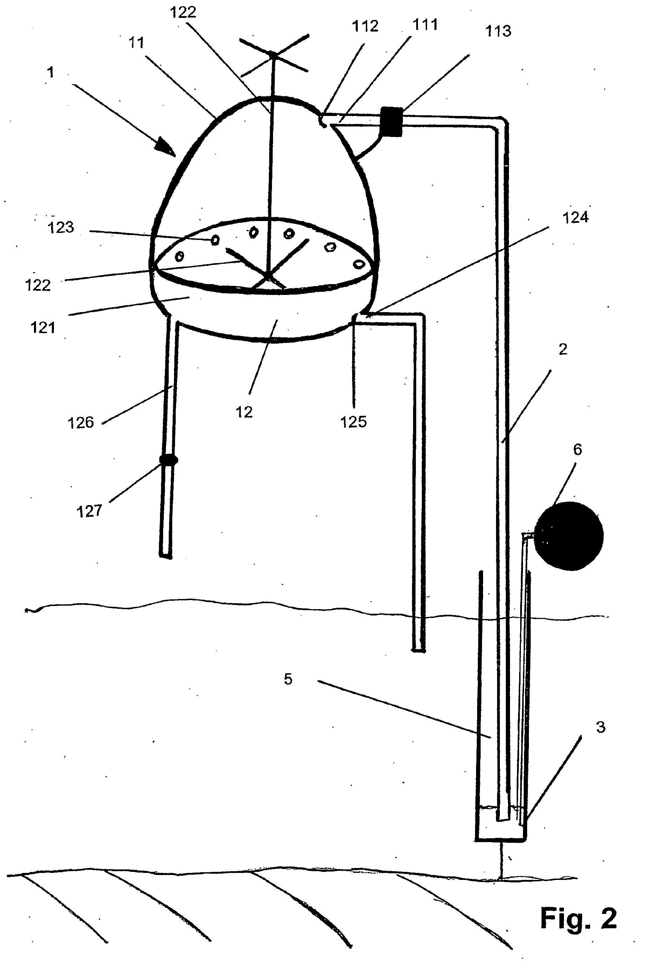

Alle in der Beschreibung, den nachfolgenden Ansprüchen und der Zeichnung dargestellten Merkmale können sowohl einzeln als auch in beliebiger Kombination miteinander erfindungswesentlich sein.

### Bezugszeichen:

| | | |
|---|---|---|
| 1 | - | Reaktor |
| 11 | - | Oberseite |
| 111 | - | Auslass |
| 112 | - | Rückschlagventil |
| 113 | - | Abscheider |
| 12 | - | Unterseite |
| 121 | - | Wasserbecken |
| 122 | - | Rührvorrichtung |
| 123 | - | Luftzuführung |
| 124 | - | Einlass |
| 125 | - | Rückschlagventil |
| 126 | - | Auslass |
| 127 | - | regelbares Ventil |
| 2 | - | Fallrohr |
| 3 | - | Kondensationsraum |
| 4 | - | Steigrohr |
| 5 | - | Steigraum |
| 6 | - | Pumpen |

## Patentansprüche

1. Vorrichtung zur Meerwasserentsalzung bestehend aus einem gegenüber der Atmosphäre luftdicht abgeschlossenen Reaktor (1), der zumindest größtenteils lichtdurchlässig ist und an seiner Oberseite (11) über einen Auslass (111) für feuchte Luft sowie an seiner Unterseite (12) über ein Wasserbecken (121) mit mindestens einer Luftzuführung (123), einen Einlass (124) für Frischmeereswasser und einen Auslass (126) für hochkonzentriertes Salzwasser verfügt, wobei der Reaktor (1) über den Auslass (111) mit einem die feuchte Luft abführenden Fallrohr (2) in Verbindung steht, das in einen Kondensierungsraum (3) im Wasser des Meeres mündet, der in ein Steigrohr (4) oder einen Steigraum (5) führt, **dadurch** gekenntzeichnet, dass im Wasserbecken des Reaktors eine Rührvorrichtung (122) vorgesehen ist, die es gestattet, durch Vergistchen frischen Meerwassers die Luft im Reaktor (1) mit Feuchtigkeit zu sättigen, dass der Kondensationsraum (3) zur Kondensation der mit Feuchtigkeit gesättigten Luft im kalten Tiefenwasser des Meeres angeordnet ist, und dass der Auslass (126) für das Salzwasser periodisch über ein regelbares Ventil (127) erfolgt.

2. Vorrichtung zur Meerwasserentsalzung nach Anspruch 1, **dadurch** gekenntzeichnet, dass der Auslass (111) mit einem Rückschlagventil (112) versehen ist.

3. Vorrichtung zur Meerwasserentsalzung nach Anspruch 1, **dadurch gekennzeichnet, dass** der Auslass (111) mit Abscheider für Wassertropfen (113) versehen ist.

4. Vorrichtung zur Meerwasserentsalzung nach Anspruch 1, **dadurch gekennzeichnet, dass** Einlass (124) mit einem Rückschlagventil (125) versehen ist.

5. Vorrichtung zur Meerwasserentsalzung nach einem der voranstehenden Ansprüche, **dadurch gekennzeichnet, dass** das Steigrohr (4) über die Meeresoberfläche führt und aus diesem Süßwasser durch Pumpen (6) absaugbar ist.

6. Vorrichtung zur Meerwasserentsalzung nach einem der voranstehenden Ansprüche, **dadurch gekennzeichnet, dass** das Fallrohr (2) in einen Kondensationsraum (3) mündet, der von dem Tiefenwasser bis zur Meeresoberfläche reicht und das Fallrohr (2) umschließt, so dass ein Steigraum gebildet ist, über den Süßwasser durch Pumpen (6) absaugbar ist.

7. Vorrichtung zur Meerwasserentsalzung nach Anspruch 1, **dadurch gekennzeichnet, dass** die Rührvorrichtung (122), die Luftzuführung (123) und die Pumpen (6) mit Strom aus erneuerbarer Energie betreibbar sind.

8. Vorrichtung zur Meerwasserentsalzung nach Anspruch 7, **dadurch gekennzeichnet, dass** die Energie Sonnenenergie, Windkraft, Kraft der Wellenbewegung ist.

9. Vorrichtung zur Meerwasserentsalzung nach den Ansprüchen 5 und 6, **dadurch gekennzeichnet, dass** durch das sequentielle- oder ständige Abpumpen des gebildeten Süßwassers zum Verbraucher sowie durch die Rückschlagventile (112) und (125) eine gerichtete Bewegung von Feuchtigkeit bzw. Flüssigkeit in der Vorrichtung generierbar ist.

10. Verfahren zur Meerwasserentsalzung unter Verwendung der Vorrichtung nach einem der voranstehenden Ansprüche umfassend die Schritte:
- Sättigung der Luft mit Feuchtigkeit durch Vergischten im Reaktor (1)
- Absaugen der mit Feuchtigkeit gesättigten Luft aus dem Reaktor (1) über das Fallrohr (2) nach dem Vergischten
- Kondensation der mit Feuchtigkeit gesättigten Luft im Kondensationsraum (3) und Absaugen des Süßwassers.

11. Verfahren nach Anspruch 10, **dadurch gekennzeichnet, dass** zum Vergischten frisches Meerwasser über das Rückschlagventil (125) und den Einlass (124) in das Wasserbecken (121) geleitet wird.

12. Verfahren nach Anspruch 11, **dadurch gekennzeichnet, dass** das Meerwasser mittels der Rührvorrichtung (122) und/oder der Luftzuführungen (123) nahezu vollständig vergischtet wird.

13. Verfahren nach Anspruch 12, **dadurch gekennzeichnet, dass** die Effizienz des Gischtens durch zusätzliches Erwärmen des Meerwasser und der Gischt erhöht wird.

14. Verfahren nach Anspruch 13, **dadurch gekennzeichnet, dass** das Erwärmen durch den Eintrag von Sonnenenergie durch die lichtdurchlässige Oberseite (11) des Reaktors (1) erfolgt.

15. Verfahren- nach Anspruch 10, **dadurch gekennzeichnet, dass** die durch das Vergischten mit Feuchtigkeit gesättigte Luft über den Auslass (111) und das Rückschlagventil (112) abgesaugt wird.

16. Verfahren nach Anspruch 15, **dadurch gekennzeichnet, dass** die Luft über und einen Abscheider für Wassertropfen (113) geführt wird.

17. Verfahren nach Anspruch 16, **dadurch gekennzeichnet, dass** als Abscheider ein tuch- oder vliesartiges Gewebe verwendet wird.

18. Verfahren nach Anspruch 16, **dadurch gekennzeichnet, dass** als Abscheider eine Zentrifuge verwendet wird.

19. Verfahren nach Anspruch 15, **dadurch gekennzeichnet, dass** das Absaugen der durch das Vergischten mit salzarmer Feuchtigkeit gesättigten Luft während oder nach dem Vergischten stattfindet.

20. Verfahren nach Anspruch 10, **dadurch gekennzeichnet, dass** die Kondensation der mit salzarmer Feuchtigkeit gesättigten Luft im Kondensationsraum (3) stattfindet.

21. Verfahren nach Anspruch 20, **dadurch gekennzeichnet, dass** die mit salzarmer Feuchtigkeit gesättigte Luft über das Fallrohr (2) in den Kondensationsraum (3), der sich im kalten Tiefenwasser befindet, geleitet und von dort das Süßwasser über das Steigrohr (4) abgepumpt wird.

22. Verfahren nach Anspruch 20, **dadurch gekennzeichnet, dass** die mit salzarmer Feuchtigkeit gesättigte Luft über das Fallrohr (2) in den Kondensationsraum (3), der von dem kalten Tiefenwasser bis zur warmen Meeresoberfläche reicht, geführt wird und sich in dem Steigraum (5) das kondensierte Süßwasser ansammelt, das durch Pumpen (6) absaugbar ist.

23. Verfahren nach Anspruch 10, **dadurch gekennzeichnet, dass** das Wasserbecken (121) kontinuierlich mit Meerwasser befüllt wird.

24. Verfahren nach Anspruch 10, **dadurch gekennzeichnet, dass** das Wasserbecken (121) periodisch von hoch konzentriertem Salzwasser befreit wird.

## Claims

1. Device for desalination of seawater comprising a reactor (1), hermetically sealed in relation to the atmosphere and at least mostly transparent, said reactor having an outlet (111) for humid air, on the upper face (11) thereof, and a water tank (121) on the lower face (12) thereof, which comprises at least one air supply (123), an inlet (124) for fresh seawater, and an outlet (126), for highly-concentrated salt water, said reactor (1) connected to a descending pipe (2), carrying off humid air, by means of the outlet (111), said pipe opening out into a condensation chamber (3) in the deep sea water, said condensation chamber leading to an ascending pipe (4) or an ascending chamber (5), **characterised in that** a stirrer device (122) is provided in the water tank of the reactor which permits, by foaming fresh seawater, to saturate the air in the reactor (1) with humidity, **in that** the condensation chamber (3) for condensation of the air saturated with humidity is provided in the cold deap sea water and **in that** the outlet (126) for the salt water is performed periodically through the controlled valve (127).

2. Device for desalination of seawater as claimed in claim 1, **characterised in that** the outlet (111) is provided with a non-return valve (112).

3. Device for desalination of seawater as claimed in claim 1, **characterised in that** the outlet (111) is provided with separator for water drops (113).

4. Device for desalination of seawater as claimed in claim 1, **characterised in that** inlet (124) is provided with a non-return valve (125).

5. Device for desalination of seawater as claimed in any one of the preceding claims, **characterised in that** the ascending pipe (4) extends to above the sea surface and that freshwater is drawn off by pumps (6).

6. Device for desalination of seawater as claimed in any one of the preceding claims, **characterised in that** the descending pipe (2) opens out into a condensation chamber (3) which extends from the deap sea water to the sea surface and encloses the descending pipe (2) so that an ascending chamber is formed from which freswater can be drawn off by pumps (6).

7. Device for desalination of seawater as claimed in claim 1, **characterised in that** the stirrer device (122), the air supply (123) and the pumps (6) can be powered by electricity from renewable energy.

8. Device for desalination of seawater as claimed in claim 7, **characterised in that** the energy is solar energy, wind power, power of the movement of waves.

9. Device for desalination of seawater as claimed in claims 5 and 8, **characterised in that** by the sequential or constant drawing off of the freshwater formed to the consumer and by the non-return valves (112) and (126) a directed movement of humidity and liquid, respectively can be generated in the device.

10. Device for desalination of seawater using the device as claimed in any one of the preceding claims comprising the steps:
- saturating the air with humidity by foaming in the reactor (1)
- drawing off the air saturated with humidity from the reactor (1) through the descending pipe (2) after foaming
- condensing the air saturated with humidity on the condensation chamber (3) and drawing off the freshwater.

11. Method as claimed in claim 10, **characterised in that**, for foaming, fresh sewater is directed through the non-return valve (125) and the inlet (124) into the water tank (121).

12. Method as claimed in claim 11, **characterised in that** the seawater is almost completely foamed by means of the stirrer device (122) and/or the air supplies (123).

13. Method as claimed in claim 12, **characterised in that** the efficiency of foaming is increased by additional heating of the seawater and the foam.

14. Method as claimed in claim 13, **characterised in that** heating is by supplying solar energy through the transparent upper face (11) of reactor (1).

15. Method as claimed in claim 10, **characterised in that** the air saturated with humidity due to foaming is drawn off through the outlet (111) and the non-return valve (112).

16. Method as claimed in claim 15, **characterised in that** the air is conducted over a separator for water drops (113).

17. Method as claimed in claim 16, **characterised in that** a cloth or fleece-like fabric is used as separator.

18. Method as claimed in claim 16, **characterised in that** a centrifuge is used as separator.

19. Method as claimed in claim 15, **characterised in that** the drawing off of the air saturated with humidity low in salt due to foaming takes place during or after foaming.

20. Method as claimed in claim 10, **characterised in that** the condensation of the air saturated with humidity low in salt takes place in the conensation chamber (3).

21. Method as claimed in claim 20, **characterised in that** the air saturated with humnidity low in salt is conducted through the descending pipe (2) into the condensation chamber (3) which is in the cold deap sea water and from there the fresh water is drawn off through ascending pipe (4).

22. Method as claimed in claim 20, **characterised in that** the air saturated with humidity low in salt is conducted through the descending pipe (2) into the condensation chamber (3), which extends from the cold deap sea water to the warm water surface, and the condensing freshwater, which can be drawn off by pumps (6), collects in the ascending chamber (5).

23. Method as claimed in claim 10, **characterised in that** the water tank (121) is continuosly filled with seawater.

24. Method as claimes in claim 10, **characterised in that** the high-concentration salt water is periodically removed from the water tank (121).

## Revendications

1. Dispositif de dessalement de l'eau de mer composé d'un réacteur (1) fermé hermétiquement par rapport à l'atmosphère, transparent à la lumière au moins pour sa plus grande partie et qui dispose sur sa face supérieure (11) d'une sortie (111) de l'air humide, ainsi que, sur sa face inférieure (12), d'un bac à eau (121) avec au moins une alimentation en air (123), une entrée (124) d'eau de mer fraîche et une sortie (126) pour l'eau salée très concentrée, le réacteur (1) étant relié par la sortie (111) à un tube de descente (2) d'évacuation de l'air humide qui débouche dans un compartiment de condensation (3) dans l'eau de la mer, qui mène à un tube ascendant (4) ou à un espace vide (5), **caractérisé par le fait qu'**un mélangeur (122) est prévu dans le bac à eau du réacteur, mélangeur qui permet de saturer l'air dans le réacteur (1) avec de l'humidité par écumage de l'eau de mer fraîche, **par le fait que** le compartiment de condensation (3) est placé dans le les eaux profondes froides de la mer pour la condensation de l'air saturé avec de l'humidité et **par le fait que** la sortie (126) de l'eau salée se fait périodiquement par une soupape réglable (127).

2. Dispositif de dessalement de l'eau de mer conformément à la revendication 1, **caractérisé par le fait que** la sortie (111) est dotée d'une soupape anti-retour (112).

3. Dispositif de dessalement de l'eau de mer conformément à la revendication 1, **caractérisé par le fait que** la sortie (111) est dotée d'une séparation pour gouttes d'eau (113).

4. Dispositif de dessalement de l'eau de mer conformément à la revendication 1, **caractérisé par le fait que** l'entrée (124) est dotée d'un clapet anti-retour (125).

5. Dispositif de dessalement de l'eau de mer conformément à l'une des revendications précédentes, **caractérisé par le fait que** le tube ascendant (4) mène à la surface de la mer et que les pompes (6) peuvent pomper de l'eau douce à partir de celui-ci.

6. Dispositif de dessalement de l'eau de mer conformément à l'une des revendications précédentes, **caractérisé par le fait que** le tube de descente (2) débouche dans un compartiment de condensation (3) qui s'étend des eaux profondes jusqu'à la surface de la mer et entoure le tube de descente (2) de manière qu'un espace vide est créé par lequel il est possible d'aspirer l'eau douce à l'aide des pompes (6).

7. Dispositif de dessalement de l'eau de mer conformément à la revendication 1, **caractérisé par le fait que** le mélangeur (122), l'amenée d'air (123) et les pompes (6) peuvent être exploités avec du courant issu d'énergies renouvelables.

8. Dispositif de dessalement de l'eau de mer conformément à la revendication 7, **caractérisé par le fait que** l'énergie est l'énergie du soleil, l'énergie éolienne, la force des mouvements des vagues.

9. Dispositif de dessalement de l'eau de mer conformément aux revendications 5 et 6, **caractérisé par le fait que**, grâce au pompage séquentiel ou constant vers le consommateur tout comme grâce aux clapets anti-retour (112) et (125), un mouvement dirigé de l'humidité et/ou du liquide dans le dispositif peut être généré.

10. Dispositif de dessalement de l'eau de mer en utilisant le dispositif selon l'une des revendications précédentes, comprenant les étapes :
- saturation de l'ère avec de l'humilité par l'écumage dans le réacteur (1)
- aspiration de l'air saturé d'humidité à partir du réacteur (1) via le tube de descente (2) après l'écumage
- condensation de l'air saturé d'humidité dans le compartiment de condensation (3) et aspiration de l'eau douce.

11. Processus selon la revendication 10, **caractérisé par le fait que** pour l'écumage, de l'eau de mer fraîche est conduite via le clapet anti-retour (125) et l'entrée (124) dans le bac à eau (121).

12. Processus selon la revendication 11, **caractérisé par le fait que** l'eau de mer est pratiquement entièrement écumée à l'aide d'un mélangeur (122) et/ou des amenées d'air (123).

13. Processus selon la revendication 12, **caractérisé par le fait que** l'efficacité de l'écumage est augmentée en réchauffant en plus l'eau de mer et l'écume.

14. Processus selon la revendication 13, **caractérisé par le fait que** le réchauffement se fait par l'apport d'énergie solaire à travers la face supérieure (11) transparente à la lumière du réacteur (1).

15. Processus selon la revendication 10, **caractérisé par le fait que** l'air saturé d'humidité par l'écumage est aspiré par la sortie (111) et le clapet anti-retour (112).

16. Processus selon la revendication 15, **caractérisé par le fait que** l'air est guidé par un séparateur pour gouttes d'eau (113)

17. Processus selon la revendication 16, **caractérisé par** le fait d'employer un tissu genre chiffon ou non-tissé en guise de séparateur.

18. Processus selon la revendication 16, **caractérisé par** le fait d'employer une centrifuge en guise de séparateur.

19. Processus selon la revendication 15, **caractérisé par le fait que** l'aspiration de l'air saturé par de l'humilité pauvre en sel à cause de l'écumage se fait pendant ou après l'écumage.

20. Processus selon la revendication 10, **caractérisé par le fait que** la condensation de l'air saturé d'humidité pauvre en sel se fait dans le compartiment de condensation (3).

21. Processus selon la revendication 20, **caractérisé par le fait que** l'air saturé d'humidité pauvre en sel est conduit via le tube de descente (2) dans le compartiment de condensation (3) qui se trouve dans l'eau profonde froide et que l'eau douce est pompée à partir de là par le tube ascendant (4).

22. Processus selon la revendication 20, **caractérisé par le fait que** l'air saturé d'humidité pauvre en sel est conduit via le tube de descente (2) dans le compartiment de condensation (3) qui s'étend de l'eau profonde froide jusqu'à la surface de la mer chaude et **par le fait que** l'eau douce condensée s'accumule dans l'espace vide (5) pour être aspirée par des pompes (6).

23. Processus selon la revendication 10, **caractérisé par le fait que** le bac d'eau (121) est continuellement rempli d'eau de mer.

24. Processus selon la revendication 10, **caractérisé par le fait que** le bac d'eau (121) est périodiquement débarrassé de l'eau salée très concentrée.
